# EUROPEAN PATENT SPECIFICATION

(11) **EP 2 870 028 B1**
(45) Date of publication and mention of the grant of the patent: **01.02.2017**
(21) Application number: 12735491.8
(22) Date of filing: 03.07.2012
(51) Int. Cl.: B60P 3/14, A47B 88/00

(54) **A SHELF**
REGALBRETT
ÉTAGÈRE

(43) Date of publication of application: 13.05.2015
(73) Proprietor: Modul-System HH AB, 431 22 Mölndal (SE)
(72) Inventor: CARLSSON, Anders, S-422 50 Hisings Backa (SE)
(74) Representative: Awapatent AB
(86) International application number: PCT/EP2012/062905
(87) International publication number: WO 2014/005620

(56) References cited:
- WO-A1-2008/077842
- US-A- 2 200 319
- US-A- 4 579 402
- US-A1- 2010 052 490

## Description

### Field of the Invention

The present invention relates to a shelf for a shelf system in a service vehicle comprising a base for arranging articles thereon and a first side wall.

### Technical Background

Service vehicles are used for a wide range of areas and the cargo space may be equipped to suit a particular application. For instance, a service vehicle may be used for storage and transport of tools for different kinds of craftsmen. It is common practise to equip the cargo space of a service vehicle with for instance storage cabinets, tool holders, shelves or other module units.

Within the vehicle industry it is always a desire to reduce the weight of a vehide and the interior within it. Normally, shelves like disclosed in US20100052490 in service vehicles are made of relatively thick metal, such as aluminium or steel, in order to be able to carry a lot of weight. Thus, these shelves are often quite heavy and also expensive due to the amount of material. Hence, there is a need for an improved shelf adapted for cargo spaces of service vehicles, which preferably is of less weight, but at the same time should be able to carry the same amount of weight as a known shelf.

### Summary of the Invention

The object of the present invention is to provide a shelf that overcomes the above issues. According to a first aspect of the invention this is accomplished by a shelf for a shelf system in a service vehicle comprising a base for arranging articles thereon and a first side wall, wherein said first side wall comprises a first wall portion connected to the base and a second wall portion, wherein said first wall portion continues into said second wall portion and said second wall portion overlaps at least partly said first wall portion in such a way that said first and second wall portions form a channel along the longitudinal direction of the first side wall, and said second wall portion is at least in some locations connected to said first wall portion along the longitudinal direction of the first side wall so that said channel is at least partly a closed channel in the longitudinal direction of the first side wall. If a side wall has at least a partly closed channel-structure, it will make the side wall more stable, which will make the shelf more durable. For example if the base of the shelf is relatively thin, the base will tend to buckle at the place where a heavy article is arranged due to the heavy load and this deformation/force will also apply to the side wall which will tend to bend towards the centre of shelf. The closed channel-structure will prevent that the side wall deforms towards the centre of the shelf. This reinforced side wall makes it possible to use a thinner sheet metal for making the shelf. The shelf may then weigh less. For example, a shelf may be made by a high-strength steel, for example ultra high strength steel, and by having the shape on the side wall described above the sheet for making the shelf may, for example be 0,6 mm thick instead of 1.2 mm. The geometry of the side wall reinforces the material and makes it stronger.

The shelf may be arrangable to a module system, module unit or a shelf system. These systems may be adapted to be used in a back space of a service vehicle.

According to at least one exemplary embodiment said channel is arranged at the upper part of said first side wall.

According to at least one exemplary embodiment a sub-portion of said second wall portion is extending essential parallel to said first wall portion in a direction towards the base and abutting said first wall portion, and said second wall portion is connected to said first wall portion in the area of said sub-portion of said second wall portion. A sub-portion gives an extra area where it is possible to create a connection between the first and the second wall portions.

According to at least one exemplary embodiment said second wall portion is connected to said first wall portion by mechanical fasteners at said locations. According to at least one exemplary embodiment said mechanical fasteners are rivets and/or screws.

According to at least one exemplary embodiment said second wall portion is connected to said first wall portion by welding or clinching. When using welding the parts can be connected to each other by spot welding or seam welding. By using clinching no extra fasteners are necessary. The two wall portions will form a kind of rivet by itself.

According to at least one exemplary embodiment said channel has a rectangular cross-section. It may, however, have any suitable shape.

According to at least one exemplary embodiment said first side wall has a longitudinal extension along the longitudinal direction of the shelf. If the shelf is a very long shelf, having a longitudinal direction, it is preferable that the reinforced wall has its extension along the longitudinal direction of the shelf since this side wall will easier collapse than a side wall which is arranged on a side which is perpendicular to the longitudinal direction of a shelf.

According to at least one exemplary embodiment said shelf comprises four sides with a first pair of opposite sides and a second pair of opposite sides, wherein said first side wall is arranged on one of the sides of said first pair of opposite sides and a second side wall is arranged on the second side of said pair first pair of opposite sides and said second side wall has the same design as said first side wall.

According to at least one exemplary embodiment said.shelf comprises four sides with a first pair of opposite sides and a second pair of opposite sides, wherein said first side wall is arranged on one of the sides of said first pair of opposite sides and a second side wall is arranged on the second side of said first pair of opposite sides and said second side wall has the same design as said first side wall but mirror inverted. By having a second side wall on the opposite side of the shelf, which has the same design as the first side wall but mirror inverted the shelf will have the same look from both sides. The shelf can then be mounted with either side wall showing towards the user, and the shelf system will always look the same.

According to at least one exemplary embodiment said shelf comprises four sides with a first pair of opposite sides and a second pair of opposite sides, wherein said first side wall is arranged on one of the sides of said first pair of opposite sides and said base comprises a base reinforcement on the second side of said first pair of opposite sides, wherein said base continues into a base portion, said base portion overlaps at least partly said base in such a way that said base portion and said base forms a channel parallel to the longitudinal direction of said first side wall, and said base portion is at least in some locations connected to said base along the longitudinal direction of the first side wall so that said channel is at least partly a closed channel parallel to longitudinal direction of the first side wall. If one side of the shelf shall be open in order to make it easier to reach articles arranged therein the shelf is preferable reinforced this way. The reinforced base side will prevent the base to deform when a heavy article is arranged on the thin base. The base reinforcement may be on the underside of said base, then it will not be in the way. The base portion may be connected to the base in the same way as described above in regard to the first wall portion and the second wall portion, i.e. by rivets, screws, welding or clinching.

According to at least one exemplary embodiment said second pair of opposite sides are arranged perpendicular to said first pair of opposite sides wherein a third side wall is arranged on one of the sides of said second pair of opposite sides and/or a fourth side wall is arranged on the other one of the sides of said second pair of opposite sides. By having a third and/or a fourth side wall the shelf gets sturdier. This, since each side wall reinforces the base of the shelf.

According to at least one exemplary embodiment said shelf comprises four sides with a first pair of opposite sides and a second pair of opposite sides, wherein said first side wall is arranged on one of the sides of said first pair of opposite sides and a third side wall is arranged on one of the sides of said second pair of opposite sides and/or a fourth side wall is arranged on the other one of the sides of said second pair of opposite sides.

According to at least one exemplary embodiment a corner clip is arranged to the first side wall and to the third and/or fourth side walls in order to connect the corner of the shelf. A corner clip connects two sidewalls together and reinforces the corner of the shelf.

According to at least one exemplary embodiment said first side wall is connected to the third side wall and/or to the fourth side wall. The first side wall may be connected to the third side wall and/or the fourth side walls by spot welding, clinching etc.

According to at least one exemplary embodiment said shelf is made of a high-strength material, for example ultra high strength steel. With these materials the Young's modulus (modulus of elasticity) is the limited factor, however the shelf is improved by the shape of the shelf i.e. the side wall/side walls of the shelf, with its partly closed channel and/or the base reinforcement discussed above.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

Other objectives, features and advantages of the present invention will appear from the following detailed disclosure, from the attached dependent claims as well as from the drawings.

### Brief Description of the Drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 discloses an open-up perspective view of a service vehicle comprising a module unit with a shelf according to the invention.
Fig. 2 discloses a perspective view of a shelf according to a first embodiment of the invention.
Fig. 3 discloses an exploded view of Fig. 2 with one side wall not bent.
Figs. 4a, 4b, 4c, 4d, 4e, 4f and 4g disclose different variants of the cross-section A-A of the side wall in Fig. 3.
Fig. 5 shows a part of Fig. 2 with one corner clip of a first embodiment exploded from the shelf.
Fig. 6 shows a second embodiment of a corner clip.
Fig. 7 shows a third embodiment of a corner clip.
Fig. 8 shows a shelf similar to Fig. 1 with the side walls according to Fig. 4b with the corners connected to each other.
Fig. 9 shows a shelf according to a second embodiment of the invention with only one side wall.
Fig. 10 shows the cross-section B-B of Fig. 9.

### Detailed Description of Preferred Embodiments

Currently preferred embodiments of the present invention will now be described in more detail, with reference to the accompanying drawings.

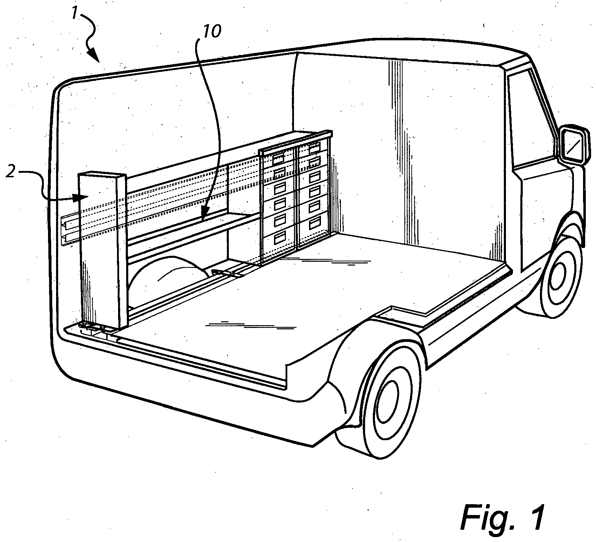

Fig. 1 shows a service vehicle 1 with a module unit 2 comprising a shelf 10. The shelf is arranged in the module unit and connected to the module unit by fasteners, for example screws (not shown).

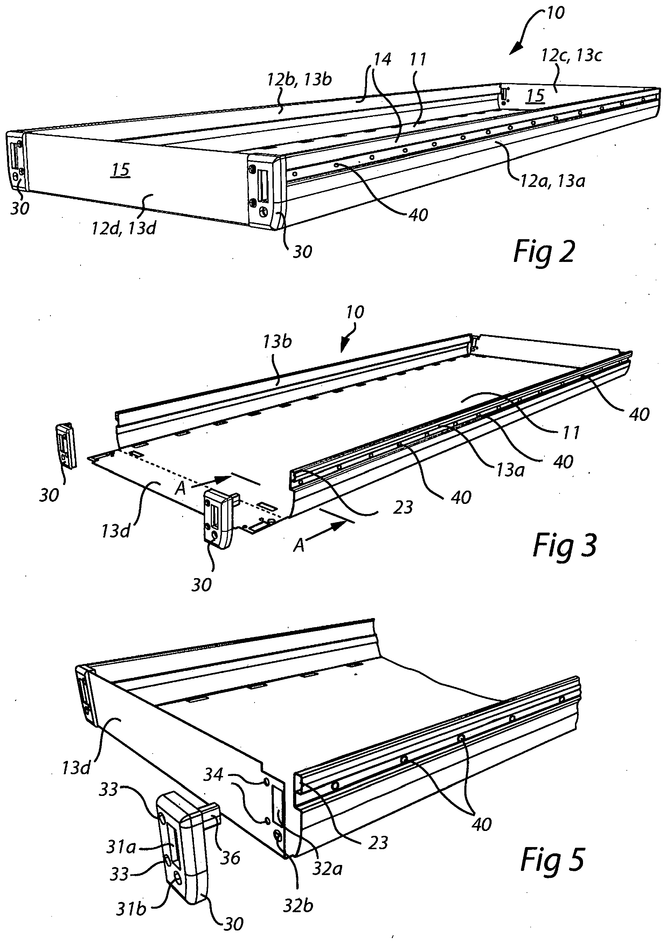

Fig. 2 shows a shelf 10, which is extending in a longitudinal direction. The shelf comprises a base 11. The base 11 has four sides 12a, 12b, 12c, 12d with a first pair of opposite sides 14 extending in the longitudinal direction of the shelf 10 and a second pair of opposite sides 15 which are arranged perpendicular to the first pair of opposite sides 14. On each side of said first pair of opposite sides 14 is a first side wall 13a and a second side wall 13b arranged. On each side of said second pair of opposite sides 15 is a third side wall 13c and a fourth side wall 13d arranged. The side walls 13a, 13b, 13c, 13d are made in one piece with the base 11 by bending the side walls 13a, 13b, 13c, 13d to a desired position. The corners of the shelf are connected by corner clips 30.

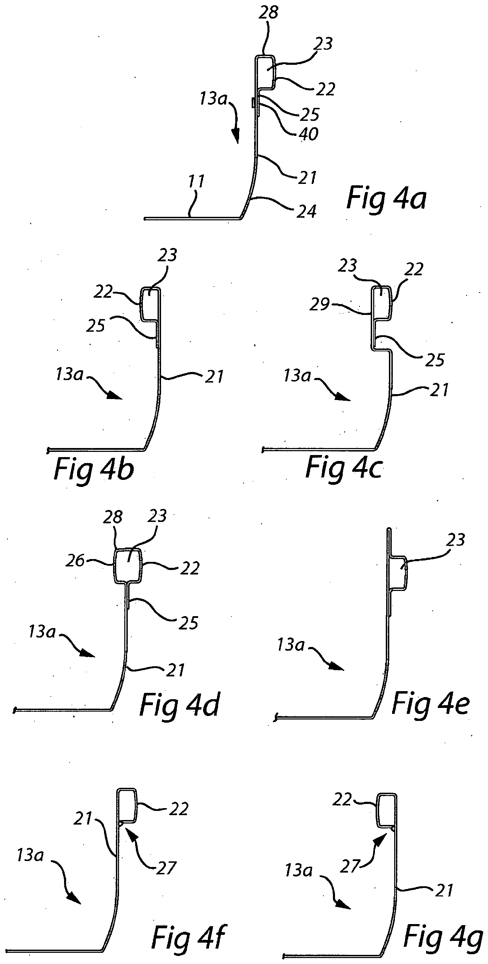

Fig. 3 shows the shelf 10 in Fig. 2 but with the fourth side wall 13d unbent, i.e. when it is in the same plane as the base 11 of the shelf 10 and with the corner clips 30 removed. The first and the second side walls 13a and 13b, which are extending in the longitudinal direction of the shelf 10, have the same shape, however they are mirror inverted. Hence, only the first side wall 13a will hereinafter be described. The first side wall 13a is so designed that it has a closed or at least a partly closed structure on its top portion, which creates a channel 23 in the longitudinal direction of the shelf 10. The channel 23 is created by the side wall 13a being bent into a suitable channel shape. Here the channel 23 is exemplified by a rectangular shape, however it may take any suitable shape, for example some of the walls of the channel may be in an angle to the other walls which are larger or smaller than 90°. The channel 23 is in at least some locations in the longitudinal direction of the side wall a closed channel. The channel 23 is, as here exemplified, closed by using rivets 40. The rivets 40 are arranged at equal distances from each other over the whole length of the shelf. The channel 23 is not limited to being closed by using rivets and they do not have to be arranged at equal distances. Further alternatives are discussed in regard to Fig. 4a and Figs. 4f and 4g.

Fig. 4a shows one exemplary embodiment of the cross-section of the first side wall 13a at cross-section A-A in Fig. 3. The cross-section shown in Fig. 3 will be discussed in regard to Fig. 4c. The first side wall 13a in Fig. 4a comprises a first wall portion 21 and a second wall portion 22. The first wall portion 21 is connected to the base 11 and it is extending perpendicular to the base 11 via a curved portion 24. The first wall portion 21 is not limited to be perpendicular to the base 11 and to have a curved portion 24. It may be in an angle to the base 11. Further the first wall portion 21 may be curved.

The first wall portion 21 continues into the second wall portion 22. This can be done via a transition portion 28, which is exemplified as perpendicular to said first wall portion 21. The second wall portion 22 overlaps partly the first wall portion 21 on the outside of shelf 10 in such a way that the first and the second wall portions 21, 22 form a loop 23, i.e. a channel 23 in the longitudinal direction of the first side wall 13a. The loop 23 has a rectangular shape and is directed towards the outside of the shelf. That is, the channel 23 has a rectangular shaped cross section. Hence, the first side wall 13a has a P-shaped top portion, which is protruding over the outer contour of the shelf. However, the channel 23 is not limited to have a rectangular shaped cross-section, it may have any suitable shape. It may for example be circular or semi-circular. A sub-portion 25 of the second wall portion 22 is extending essentially parallel to the first wall portion in a direction towards the base 11 and it is abutting the first wall portion 21. The second wall portion 22 is connected to the first wall portion 21 in the area of the sub-portion 25 of the second wall portion 22 by clinching the two metal parts together so that one kind of rivet 40 is formed. Several connections are arranged in this area along the longitudinal direction of the first wall. Alternatively rivets, screws and nuts, or sheet metal screws could be used to connect the two wall portions 21, 22 together. They could also be spot welded or welded over a distance or over the whole length of the first side wall 13a.

Fig. 4b shows a similar design of the first side wall 13a as the one described with regard to Fig. 4a, with the differences that the second wall portion 22 is overlapping the first wall portion 21 on the inside of the self, so that the loop, i.e. the channel 23 is on the inside of the shelf. That is the P-shaped top portion is pointing in the opposite direction, i.e. it has a mirror inverted P-shape to the one shown in Fig. 4a. The second wall portion 22 also has a similar sub-portion 25 as described above, however arranged on the inside of the shelf and it can be connected to the first wall portion 21 in a similar way as described above.

Fig. 4c shows the cross-section at A-A in Fig. 3 of the first side wall 13a. The shape of the cross-section is almost the same as the one described in regard to Fig. 4a, except that the whole overlapping second wall portion 22, including the sub-portion 25, and a sub-portion 29 of the first wall portion 21 which is being overlapped by the second wall portion 22 is projecting into the shelf. Hence, the first side wall 13a has a step shaped shape. This way the outer contour of the top portion of the first wall 13a follows the outer contour of the shelf, i.e. the P-shaped top portion is not protruding outside the outer contour of the shelf. That is the first wall portion 21. The second wall portion 22 also has a similar sub-portion 25 as described above and it can be connected to the first wall portion 21 in a similar way as described above.

Fig. 4d shows another exemplary embodiment where the loop 23, i.e. the channel 23 is centrally arranged over the first side wall 13a. The first wall portion 21 has a step shaped top portion 26 which continues into the second wall portion 22 via a transition portion 28 and the second wall portion 22 overlaps partly the first wall portion 21 in such a way that the step shaped top portion 26 and the second wall portion 22 forms the loop 23, i.e. the channel 23 in the longitudinal direction of the first side wall 13a. The loop 23 has a rectangular shape and is directed towards both the outside and the inside of the shelf. The loop/channel 3 may however have a different shape than rectangular. The second wall portion 22 also has a similar sub-portion 25 as described above and it can be connected to the first wall portion 21 in a similar way as described above.

The side wall 13a in Fig. 4e has a similar shape as the side wall 13a in Fig. 4a, except that the loop 23, i.e. the channel is not right on the top of the first wall 13a. The loop, i.e. the channel 23 is positioned at a distance from the top.

Fig. 4f shows the first side wall 13a, similar to Fig. 4a but without a sub-portion (sub-portion 25 in Fig. 4a) on the second wall portion 22. Instead the second wall portion 22 is directly welded 27 to the first wall portion 21 and it ends perpendicular to the first wall portion 21.

Fig. 4g shows the first side wall 13a, similar to Fig. 4f, with the second side portion 22 welded to the first portion 21, but mirror inverted.

In Fig. 2 and Fig. 3 both the first side wall 13a and the second side wall 13b are the same, however mirror inverted. They may, however, differ. For example the first side wall 13a may have a side wall as described in regard to Fig. 4a and the second side wall 13b may have a side wall as described in regard to for example Fig. 4d.

The third and the fourth side walls 13c and 13d in Fig. 2, which are extending perpendicular to the longitudinal direction of the shelf 10 are each a one portion wall which is here extending perpendicular to the base 11 of the shelf. In the area where the end clip 30 shall be positioned, openings are provided which correspond to connecting parts of the corner clips.

In Fig. 5 one corner clip 30 is removed. The corner clip 30 has an approximately rectangular shape which is adapted to follow the outer contour of the shelf. It has a protruding connecting portion 36, which has an outer contour which follows the inner contour of the loop 23, i.e. the inner contour of the channel 23, however it is slightly smaller so that it fits into the loop/channel 23. The clip 30 has a larger rectangular 31 a and a smaller shelf mounting opening 31 b. The fourth sidewall 13d has on each respective side a larger rectangular 32a and a smaller shelf mounting opening 32b which each will be in register with the larger rectangular 31 a and the smaller shelf mounting opening 31 b of a respective corner clip 30 when the clip 30 is arranged to the corners of the shelf. These openings can be used to arrange the shelf to a side unit or to a module unit. Through the holes 33, 34 in the corner clip and the shelf the clip can be fastened to the shelf, for example by screws. This corner clip if preferably made of plastic, may however be of other suitable materials.

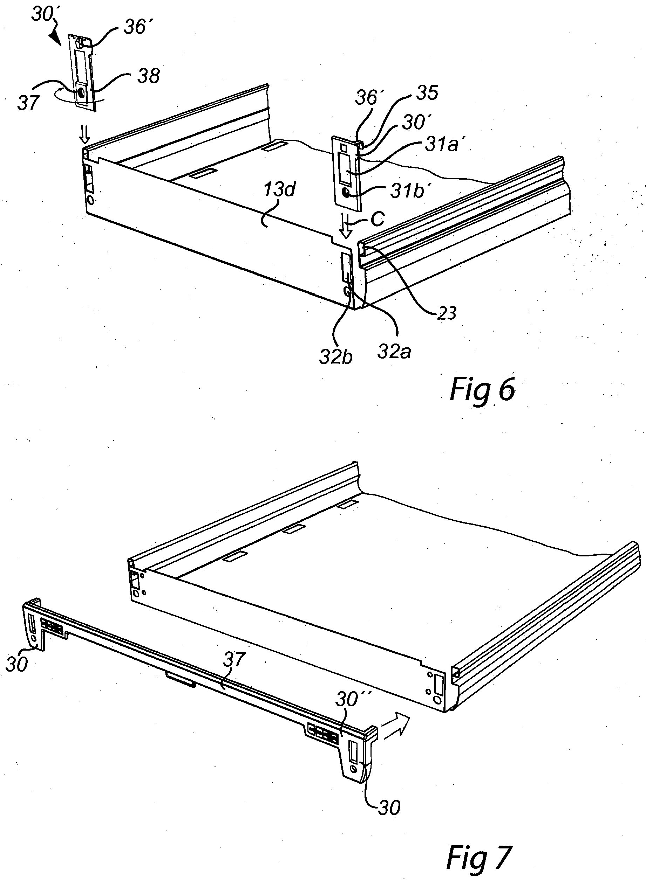

Fig. 6 shows another corner clip 30'. This is a sheet metal corner clip 30'. The corner clip 30' has an approximately rectangular shape which is adapted to follow the outer contour of the shelf. It has a protruding connecting portion 36' with a tab 35 on the side facing the inner side of the shelf when arranged to the shelf. The protruding connecting portion 36'and its tab 35 will connect to the channel 23. The tab 35 will protrude into a hole (not shown) on the top of the channel. The clip 30' has a larger rectangular 31 a' and a smaller shelf mounting opening 31b'. The fourth sidewall 13d has on each respective side a larger rectangular 32a and a smaller shelf mounting opening 32b, similar to the one shown in Fig. 5, which each will be in register with the larger rectangular 31 a' and the smaller shelf mounting opening 31 b' of the corner clip 30' when the corner clip 30' is arranged to the corners of the shelf. These openings can be used to arrange the shelf to a side unit. The larger rectangular shelf mounting opening 31 a' has a tongue 38 which is bent from the material in the clip towards the side facing the inner side of the shelf when arranged to the shelf. The corner clip 31 will be attached on the shelf by being pushed onto the side wall 13d from above, see arrow C. The tongue 38 will pass through the larger rectangular mounting opening 32a and will overlap part of the third side wall 13d on the inside of the shelf. The tongue 38 also. has an opening 37 which will be in register with the smaller shelf mounting opening 31 b when arranged in a correct position on the side wall 13d.

Fig. 7 shows a corner clip 30" which will connect two corners to each other. The corner clip 30" comprises of two corner clips 30 as described in regard to Fig. 5, and will hence not be further described, and they are connected by a connecting part 37 which connects the two corner clips 30 into a single corner clip 30". The corner clip 30" is preferably made of plastic and made in one piece. The connected corner clip 30" and shelf 10 may also have the holes 33, 34 shown in Fig. 5 but not shown in Fig. 7. If it has the holes the corner clip can be fastened to the shelf, for example by screws.

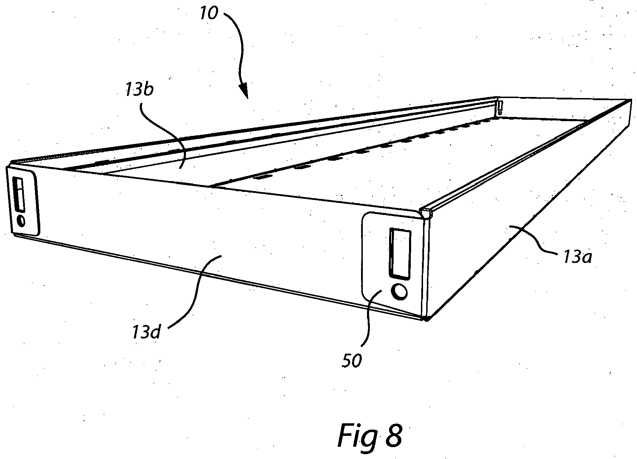

Fig. 8 shows a shelf 10 without corner clips. Here the first side wall 13a and the fourth side wall 13d are connected to each other by a portion 50 of the first side wall 13a, which is being bent so that it overlaps the fourth side wall 13d and they are connected by, for example, spot welding. However they can be riveted or clinched or attached in any suitable way. All corners are connected this way. Alternatively, the fourth side wall 13d may comprise a portion which is bent so that it overlaps the first side wall 13a and they may then be attached together.

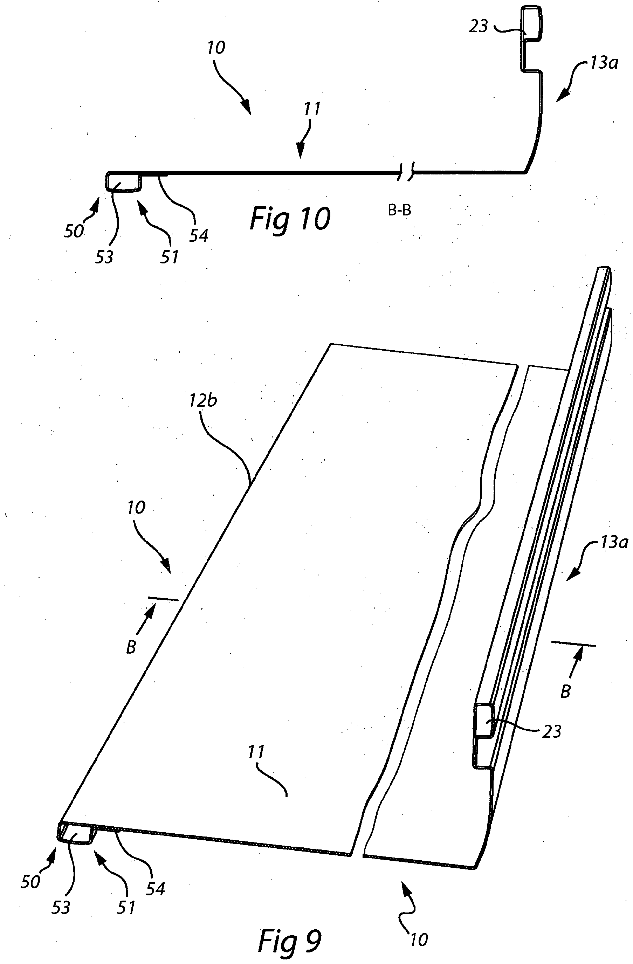

Fig. 9 shows a second embodiment of the shelf 10. The shelf 10 has a similar design to the shelf as described in regard to Fig. 2. It has a first side wall 13a with its channel 23, i.e. a first channel. However at the second side 12b of the base there is no second side wall arranged and no third and fourth side walls are shown, however they may be there and the corners can be connected to each other by, for examples, corner clips. Instead of a second side wall the shelf is open and comprises a base reinforcement 50 on the second side 12b.

Fig. 10 shows the cross-section B-B with the base reinforcement 50 on one side. The base 11 continues into a base portion 51 (see also Fig. 9), which overlaps at least partly said base 11 on the underside in such a way that said base portion 51 and said base 11 forms a channel 53, i.e. a second channel, along the longitudinal direction of the first side wall 13a. The base portion 51 has a sub portion 54 which is abutting the underside of the base 11. The base portion 53 is at least in some positions at the area of the sub portion 54 connected to said base 11 along the longitudinal direction of the first side wall 13 so that the channel 53 is at least partly a closed channel 53 in the longitudinal direction of the first side wall 13a. The connection can be done in the same way as described for the first side wall 13a.

The channel 53 has a rectangular cross-section. However it is not limited to be rectangular, it may take any suitable shape, for example any one of the ones described in regard to the channel 23 of the first side wall 13a. The base portion 51 does not have to overlap on the underside of the base 11, it may overlap on the upper side.

The shelves described in regard to the Figs. 1-10 are made of sheet metal which are being roll formed or bent.

## Claims

1. A shelf (10) for a shelf system in a service vehicle (1) comprising a
base (11) for arranging articles thereon and
a first side wall (13a), wherein
said first side wall (13a) comprises
a first wall portion (21) connected to the base (11) and a second
wall portion (22),
wherein said first wall portion (21) continues into said second wall portion (22) and
said second wall portion (22) overlaps at least partly said first wall portion (21) in such a way that said first and second wall portion (21, 22) form a channel (23) along the longitudinal direction of the first side wall, and
said second wall portion (22) is at least in some locations connected to said first wall portion (21) along the longitudinal direction of the first side wall (13a) so that said channel (23) is at least partly a closed channel (23) in the longitudinal direction of the first side wall (13a), **characterized in that** said shelf (10) comprises four sides (12a, 12b, 12c, 12d) with a first pair of opposite sides (14) and a second pair of opposite sides (15), wherein said first side wall (13a) is arranged on one (12a) of the sides (12a, 12b) of said first pair of opposite sides (14) and a third side wall (13c) is arranged on one of the sides of said second pair of opposite sides (15) and/or a fourth side wall (13d) is arranged on the other one of the sides of said second pair of opposite sides (15).

2. A shelf (10) according to claim 1, wherein said channel (23) is arranged at the upper part of said first side wall (13a).

3. A shelf (10) according to any one of the preceding claims, wherein a sub-portion (25) of said second wall portion (22) is extending essentially parallel to said first wall portion (21) in a direction towards the base (11) and abutting said first wall portion (21), and said second wall portion (22) is connected to said first wall portion (21) in the area of said sub-portion (25) of said second wall portion (22).

4. A shelf (10) according to any one of the preceding claims, wherein said second wall portion (22) is connected to said first wall portion (21) by mechanical fasteners at said locations.

5. A shelf (10) according to claim 4, wherein said mechanical fasteners are rivets (25) and/or screws.

6. A shelf (10) according to any one of claims 1 to 3, wherein said second wall portion (22) is connected to said first wall portion (21) by welding or clinching.

7. A shelf (10) according to any one of the preceding claims, wherein said channel (23) has a rectangular cross-section.

8. A shelf (10) according to any one of the preceding claims, wherein said first side wall (13a) has a longitudinal extension along the longitudinal direction of the shelf (10).

9. A shelf (10) according to any one of the preceding claims, wherein said shelf (10) comprises four sides (12a, 12b, 12c, 12d) with a first pair of opposite sides (14) and a second pair of opposite sides (15), wherein said first side wall (13a) is arranged on one of the sides of said first pair of opposite sides (14) and a second side wall (13b) is arranged on the second side of said first pair of opposite sides (14) and said second side wall (13b) has the same design as said first side wall (13a).

10. A shelf (10) according to claim 9 wherein said second side wall (13b) is mirror inverted to said first side wall (13a).

11. A shelf (10) according to any one of claims 1 to 8, wherein said shelf (10) comprises four sides (12a, 12b, 12c, 12d) with a first pair of opposite sides (14) and a second pair of opposite sides (15), wherein said first side wall (13a) is arranged on one (12a) of the sides (12a, 12b) of said first pair of opposite sides (14) and said base (11) comprises a base reinforcement (50) on the second side of said pair first pair of opposite sides (14), wherein said base (11) continues into a base portion (51),
said base portion (51) overlaps at least partly said base (11) in such a way that said base portion (51) and said base (11) forms a channel (53) parallel to the longitudinal direction of said first side wall (13a), and
said base portion (51) is at least in some locations connected to said base (11) along the longitudinal direction of the first side wall (13a) so that said channel (53) is at least partly a closed channel parallel to longitudinal direction of the first side wall (13a).

12. A shelf according to claim 9 or 10 or 11, wherein said second pair of opposite sides (15) is arranged perpendicular to said first pair of opposite sides (14) wherein a third side wall (13c) is arranged on one of the sides of said second pair of opposite sides (15) and/or a fourth side wall (13d) is arranged on the other one of the sides of said second pair of opposite sides (15).

13. A shelf according to claim 12, wherein a corner clip (30) is arranged to said first side wall (13a) and to at least one of said third or fourth side walls (13c, 13d) in order to connect the corner of the shelf.

14. A shelf according to claim 12, wherein said first side wall (13a) is connected to said third side wall (13c) and/or to said fourth side wall (13d).

15. A shelf according to any one of preceding claims, wherein said shelf is made of a high-strength material, for example ultra high strength steel.

## Patentansprüche

1. Regalbrett (10) für ein Regalsystem in einem Servicefahrzeug (1), das eine Basis (11) zum Anordnen von Artikeln darauf und
eine erste Seitenwand (13a) umfasst, wobei
die erste Seitenwand (13a) Folgendes umfasst
einen ersten Wandabschnitt (21), der mit der Basis (11) verbunden ist, und einen zweiten Wandabschnitt (22),
wobei der erste Wandabschnitt (21) in den zweiten Wandabschnitt (22) fortläuft, und
wobei der zweite Wandabschnitt (22) den ersten Wandabschnitt (21) zumindest teilweise derart überlappt, dass der erste und der zweite Wandabschnitt (21, 22) einen Durchgang (23) entlang der Längsrichtung der ersten Seitenwand bilden, und
wobei der zweite Wandabschnitt (22) zumindest an einigen Stellen mit dem ersten Wandabschnitt (21) entlang der Längsrichtung der ersten Seitenwand (13a) derart verbunden ist, dass der Durchgang (23) zumindest teilweise ein geschlossener Durchgang (23) in der Längsrichtung der ersten Seitenwand (13a) ist,
**dadurch gekennzeichnet, dass** das Regalbrett (10) vier Seiten (12a, 12b, 12c, 12d) mit einem Paar gegenüberliegender Seiten (14) und einem zweiten Paar gegenüberliegender Seiten (15) umfasst, wobei die erste Seitenwand (13a) auf einer (12a) der Seiten (12a, 12b) des ersten Paars gegenüberliegender Seiten (14) angeordnet ist und eine dritte Seitenwand (13c) auf einer der Seiten des zweiten Paars gegenüberliegender Seiten (15) angeordnet ist, und/oder eine vierte Seitenwand (13d) auf der anderen Seite des zweiten Paars gegenüberliegender Seiten (15) angeordnet ist.

2. Regalbrett (10) nach Anspruch 1, wobei der Durchgang (23) am oberen Teil der ersten Seitenwand (13a) angeordnet ist.

3. Regalbrett (10) nach einem der vorhergehenden Ansprüche, wobei ein Unterabschnitt (25) des zweiten Wandabschnitts (22) sich im Wesentlichen parallel zu dem ersten Wandabschnitt (21) in Richtung der Basis (11) erstreckt und an den ersten Wandabschnitt (21) anstößt, und der zweite Wandabschnitt (22) mit dem ersten Wandabschnitt (21) im Bereich des Unterabschnitts (25) des zweiten Wandabschnitts (22) verbunden ist.

4. Regalbrett (10) nach einem der vorhergehenden Ansprüche, wobei der zweite Wandabschnitt (22) mittels mechanischer Befestigungsmittel an den einigen Stellen mit dem ersten Wandabschnitt (21) verbunden ist.

5. Regalbrett (10) nach Anspruch 4, wobei es sich bei den mechanischen Befestigungsmitteln um Niete (25) und/oder Schrauben handelt.

6. Regalbrett (10) nach einem der Ansprüche 1 bis 3, wobei der zweite Wandabschnitt (22) mittels Schweißen oder Durchsetzfügen mit dem ersten Wandabschnitt (21) verbunden ist.

7. Regalbrett (10) nach einem der vorhergehenden Ansprüche, wobei der Durchgang (23) einen rechteckigen Querschnitt aufweist.

8. Regalbrett (10) nach einem der vorhergehenden Ansprüche, wobei die erste Seitenwand (13a) eine längliche Ausdehnung entlang der Längsrichtung des Regalbretts (10) aufweist.

9. Regalbrett (10) nach einem der vorhergehenden Ansprüche, wobei das Regalbrett (10) vier Seiten (12a, 12b, 12c, 12d) mit einem ersten Paar gegenüberliegender Seiten (14) und einem zweiten Paar gegenüberliegender Seiten (15) umfasst, wobei die erste Seitenwand (13a) auf einer der Seiten des ersten Paars gegenüberliegender Seiten (14) angeordnet ist und eine zweite Seitenwand (13b) auf der zweiten Seite des ersten Paars gegenüberliegender Seiten (14) angeordnet ist und die zweite Seitenwand (13b) dieselbe Gestaltung aufweist wie die erste Seitenwand (13a).

10. Regalbrett (10) nach Anspruch 9, wobei die zweite Seitenwand (13b) spiegelverkehrt zur ersten Seitenwand (13a) ist.

11. Regalbrett (10) nach einem der Ansprüche 1 bis 8, wobei das Regalbrett (10) vier Seiten (12a, 12b, 12c, 12d) mit einem ersten Paar gegenüberliegender Seiten (14) und einem zweiten Paar gegenüberliegender Seiten (15) umfasst, wobei die erste Seitenwand (13a) auf einer (12a) der Seiten (12a, 12b) des ersten Paars gegenüberliegender Seiten (14) angeordnet ist und die Basis (11) eine Basisverstärkung (50) auf der zweiten Seite des ersten Paars gegenüberliegender Seiten (14) umfasst, wobei die Basis (11) in einen Basisabschnitt (51) fortläuft,
wobei der Basisabschnitt (51) die Basis (11) zumindest teilweise derart überlappt, dass der Basisabschnitt (51) und die Basis (11) einen Durchgang (53) parallel zur Längsrichtung der ersten Seitenwand (13a) bilden, und
der Basisabschnitt (51) zumindest an einigen Stellen entlang der Längsrichtung der ersten Seitenwand (13a) mit der Basis (11) derart verbunden ist, dass der Durchgang (53) zumindest teilweise ein geschlossener Durchgang parallel zur Längsrichtung der ersten Seitenwand (13a) ist.

12. Regalbrett nach Anspruch 9 oder 10 oder 11, wobei das zweite Paar gegenüberliegender Seiten (15) senkrecht zu dem ersten Paar gegenüberliegender Seiten (14) angeordnet ist, wobei eine dritte Seitenwand (13c) auf einer der Seiten des zweiten Paars gegenüberliegender Seiten (15) angeordnet ist und/oder eine vierte Seitenwand (13d) auf der anderen Seite des zweiten Paars gegenüberliegender Seiten (15) angeordnet ist.

13. Regalbrett nach Anspruch 12, wobei ein Eck-Clip (30) an der ersten Seitenwand (13a) und an mindestens einer der dritten oder vierten Seitenwand (13c, 13d) angeordnet ist, um die Ecke des Regalbretts zu verbinden.

14. Regalbrett nach Anspruch 12, wobei die erste Seitenwand (13a) mit der dritten Seitenwand (13c) und/oder der vierten Seitenwand (13d) verbunden ist.

15. Regalbrett nach einem der vorhergehenden Ansprüche, wobei das Regalbrett aus einem Hochfestigkeitsmaterial hergestellt ist, beispielsweise aus ultrahochfestem Stahl.

## Revendications

1. Étagère (10) pour système d'étagère dans un véhicule d'entretien (1) comprenant une base (11) pour disposer des articles dessus et
une première paroi latérale (13a),
ladite première paroi latérale (13a) comprenant
une première partie de paroi (21) connectée à la base (11) et une deuxiième partie de paroi (22),
ladite première partie de paroi (21) se continuant dans ladite deuxième partie de paroi (22) et
ladite deuxième partie de paroi (22) chevauchant au moins partiellement ladite première partie de paroi (21) de manière à ce que lesdites première et deuxième parties de paroi (21, 22) forment un canal (23) dans le sens longitudinal de la première paroi latérale et
ladite deuxième partie de paroi (22) étant du moins à certains emplacements connectée à ladite première partie de paroi (21) dans le sens longitudinal de la première paroi latérale (13a) de manière à ce que ledit canal (23) soit au moins partiellement un canal fermé (23) dans le sens longitudinal de la première paroi latérale (13a),
**caractérisée en ce que** ladite étagère (10) comprend quatre faces (12a, 12b, 12c, 12d) avec une première paire de faces opposées (14) et une seconde paire de faces opposées (15), ladite première paroi latérale (13a) étant disposée sur une (12a) des faces (12a, 12b) de ladite première paire de faces opposées (14) et une troisième paroi latérale (13c) étant disposée sur une des faces de ladite seconde paire de faces opposées (15) et/ou une quatrième paroi latérale (13d) étant disposée sur l'autre des faces de ladite seconde paire de faces opposées (15).

2. Étagère (10) selon la revendication 1, dans laquelle ledit canal (23) est disposé dans la partie supérieure de ladite première paroi latérale (13a).

3. Étagère (10) selon l'une quelconque des revendications précédentes, dans laquelle une sous-partie (25) de ladite deuxième paroi (22) s'étend sensiblement parallèlement à ladite première partie de paroi (21) dans un sens dirigé vers la base (11) et en butant contre ladite première partie de paroi (21) et ladite deuxième partie de paroi (22) est connectée à ladite première partie de paroi (21) au niveau de ladite sous-partie (25) de ladite deuxième partie latérale (22).

4. Étagère (10) selon l'une quelconque des revendications précédentes, dans laquelle ladite deuxième partie de paroi (22) est connectée à ladite première partie de paroi (21) par des fixations mécaniques auxdits emplacements.

5. Étagère (10) selon la revendication 4, dans laquelle lesdites fixations mécaniques sont des rivets (25) et/ou des vis.

6. Étagère (10) selon l'une quelconque des revendications 1 à 3, dans laquelle ladite deuxième partie de paroi (22) est connectée à ladite première partie de paroi (21) par soudage ou sertissage.

7. Étagère (10) selon l'une quelconque des revendications précédentes, dans laquelle ledit canal (23) a une section transversale rectangulaire.

8. Étagère (10) selon l'une quelconque des revendications précédentes, dans laquelle ladite première paroi latérale (13a) a une extension longitudinale dans le sens longitudinal de l'étagère (10).

9. Étagère (10) selon l'une quelconque des revendications précédentes, dans laquelle ladite étagère (10) comporte quatre faces (12a, 12b, 12c, 12d) avec une première paire de faces opposées (14) et une deuxième paire de faces opposées (15), la première paroi latérale (13a) étant disposée sur une des faces de ladite première paire de faces opposées (14) et une deuxième paroi latérale (13b) étant disposée sur la deuxième face de ladite première paire de faces opposées (14) et ladite deuxième paroi latérale (13b) ayant la même conception que ladite première paroi latérale (13a).

10. Étagère (10) selon la revendication 9, dans laquelle ladite deuxième paroi latérale (13b) est inversée en miroir par rapport à ladite première paroi latérale (13a).

11. Étagère (10) selon l'une quelconque des revendications 1 à 8, dans laquelle ladite étagère (10) comprend quatre faces (12a, 12b, 12c, 12d) avec une première paire de faces opposées (14) et une deuxième paire de faces opposées (15), ladite première paroi latérale (13a) étant disposée sur une (12a) des faces (12a, 12b) de ladite première paire de faces opposées (14) et ladite base (11) comprenant un renfort de base (50) sur ladite deuxième face de ladite première paire de faces opposées (14), ladite base (11) se continuant en une partie de base (51),
ladite partie de base (51) chevauchant au moins partiellement ladite base (11) de manière à ce que ladite partie de base (51) et ladite base (11) forment un canal (53) parallèle au sens longitudinal de ladite première paroi latérale (13a), et
ladite partie de base (51) étant au moins à certains emplacements connectée à ladite base (11) dans le sens longitudinal de la première paroi latérale (13a) de manière à ce que ledit canal (53) soit au moins partiellement un canal fermé parallèle au sens longitudinal de la première paroi latérale (13a).

12. Étagère selon la revendication 9 ou 10 ou 11, dans laquelle ladite deuxième paire de faces opposées (15) est disposée perpendiculairement à ladite première paire de faces opposées (14), une troisième paroi latérale (13c) étant disposée sur une des faces de ladite deuxième paire de faces opposées (15) et/ou une quatrième paroi latérale (13d) étant disposée sur l'autre des faces de ladite deuxième paire de faces opposées (15).

13. Étagère selon la revendication 12, dans laquelle un clip de de coin (30) est disposé sur ladite première paroi latérale (13a) et sur au moins une desdites troisième ou quatrième parois latérales (13c, 13d) afin de connecter le coin de l'étagère.

14. Étagère selon la revendication 12, dans laquelle ladite première paroi latérale (13a) est connectée à ladite troisième paroi latérale (13c) et/ou à ladite quatrième paroi latérale (13d).

15. Étagère selon l'une quelconque des revendications précédentes, dans laquelle ladite étagère est en matériau à haute résistance, par exemple de l'acier à ultrahaute résistance.
